# EUROPEAN PATENT APPLICATION

(11) **EP 4 783 745 A1**
(43) Date of publication of application: **29.07.2026**
(21) Application number: 25187068.9
(22) Date of filing: 02.07.2025
(51) Int. Cl.: H05B 47/155, H05B 47/19, G06T 13/00, G09F 9/30

(54) **METHOD, DEVICE, AND MEDIUM FOR IMPLEMENTING ANIMATION EFFECTS OF BLUETOOTH STRING LIGHTS**

(30) Priority: 24.01.2025 CN 202510115969
(71) Applicant: Agzzx Optoelectronics Technology Co., Ltd, Fuzhou Fujian (CN)
(72) Inventor: Lin, Fufei, Pingtan County, Fujian Province (CN); Shi, Qiang, Pingtan County, Fujian Province (CN); Huang, Chunming, Xiamen City, Fujian Province (CN)
(74) Representative: Plavsa, Olga

(57) **Abstract**

The present invention discloses a method, device, and medium for implementing animation effects in Bluetooth string lights. The method comprises the following steps: S1, creating a graphic renderer based on preset graphic data, wherein the graphic renderer draws a plurality of light bead graphics, and the plurality of light bead graphics constitute a string light graphic; S2, creating an animation frame generator according to an animation type, wherein the animation frame generator generates animation frame objects; S3, starting a display thread, wherein the display thread acquires the animation frame objects and sends them to the graphic renderer, and the graphic renderer renders the display colors of the light bead graphics respectively according to the animation frame objects, such that the display view shows a corresponding animation effect and/or the Bluetooth string light displays a corresponding lighting effect. The animation effect implementation method provides high efficiency and flexibility in dynamic adjustment.

## Description

### Technical Field

The present invention relates to the field of display control technologies, and more particularly, to a method, device, and medium for implementing animation effects of Bluetooth string lights.

### Background

Smart Bluetooth string lights are lighting products that can be controlled via Bluetooth technology. They are widely used in scenarios such as home decoration, stage performances, and festive celebrations. Users can control the string lights through a control program on a terminal device. The control program displays animation effects on the terminal and simultaneously controls the Bluetooth string lights to present the same animation effects. However, conventional animation effects for Bluetooth string lights rely on real-time calculations of the color and position of each light bead based on images and specific motion rules. When processing complex animations or multiple animations concurrently, a significant amount of computing resources is required. This results in an excessive processing load on the terminal device's processor, often leading to overheating, lag, or instability, which severely affects device performance and reliability. Additionally, when the image or animation effect needs to be adjusted, conventional methods require complex recalculations, making it difficult and time-consuming to modify the animation effects.

### Summary

The technical problem addressed by the present invention is to provide a method, device, and medium for implementing animation effects of Bluetooth string lights, in order to reduce the computational burden and enhance the flexibility of animation effect changes.

To solve the above technical problem, the present invention provides a method for implementing animation effects of Bluetooth string lights, comprising the following steps:

S1: Creating a graphic renderer based on preset graphic data, wherein the graphic renderer draws a plurality of light bead graphics, and the plurality of light bead graphics form a string light graphic;

S2: Creating an animation frame generator according to an animation type, wherein the animation frame generator generates animation frame objects;

S3: Starting a display thread, wherein the display thread obtains the animation frame objects and sends them to the graphic renderer; the graphic renderer renders the display colors of each of the light bead graphics based on the animation frame objects, so that a display view presents the corresponding animation effect and/or controls the Bluetooth string lights to display the corresponding lighting effect.

In a further embodiment, in step S1, creating a graphic renderer based on preset graphic data comprises the step:

Determining a rendering format according to the preset graphic data, wherein the rendering format comprises a rendering method and rendering parameters; and creating the graphic renderer based on the determined rendering format.

In a further embodiment, in step S1, drawing the plurality of light bead graphics by the graphic renderer comprises: generating a light bead array by the graphic renderer; drawing the plurality of light bead graphics based on the light bead array.

In a further embodiment, the preset graphic data comprises a plurality of preset graphic parameters corresponding one-to-one to the light bead graphics, wherein the preset graphic parameters include bead positions and bead sizes;

Generating the light bead array by the graphic renderer comprises: creating the light bead array; calculating a scaling factor based on the size of a preset view in the preset graphic data and the size of the display view; traversing the preset graphic parameters, and generating corresponding bead objects based on the scaling factor and the parameters; the bead objects are stored in the light bead array.

In a further embodiment, in step S2, creating an animation frame generator based on the animation effect comprises: determining the animation type based on the animation effect; creating the animation frame generator based on the animation type.

In a further embodiment, in step S2, generating the animation frame object by the animation frame generator comprises: calculating a gradient color array for each light bead graphic based on a preset color array and the number of light bead graphics; creating an animation frame object; configuring animation frame parameters for the animation frame object and placing the animation frame parameters into a frame queue; calculating a refresh interval, updating the animation frame parameters of the animation frame object according to the refresh interval to generate a new animation frame object, and placing the new animation frame object into the frame queue.

In a further embodiment, in step S3, obtaining the animation frame object by the display thread comprises: retrieving the animation frame object from the frame queue by the display thread.

In a further embodiment, the animation frame object comprises at least one of: animation type, animation speed, animation direction, and animation graphic density; wherein the animation graphic density is used to calculate the number of light bead graphics involved in generating the animation effect based on the animation frame object.

Another objective of the present invention is to provide an electronic device comprising: a processor; and a memory storing a computer program, wherein the computer program is configured to be executed by the processor to implement the above-described method for implementing animation effects of Bluetooth string lights.

Another objective of the present invention is to provide a computer-readable electronic medium, wherein the electronic medium is a computer-readable storage medium storing a computer program, and the computer program is configured to be executed by a processor to implement the above-described animation effect implementation method.

The present invention offers the following beneficial effects: The animation effect implementation method provided by the present invention enables the graphic renderer to draw light bead graphics. The renderer determines the display color of each bead graphic based on animation frame objects generated by the animation frame generator. The collaboration between the graphic renderer and the animation frame generator enhances the efficiency of generating and rendering animation frames, allowing smooth and vivid animation effects to be displayed on Bluetooth string lights. Furthermore, this method eliminates the need for real-time computation of each bead's color and position, thus requiring fewer computational resources. Moreover, the graphic renderer can dynamically adjust images or animation effects by changing parameters, without redrawing the entire set of bead graphics. Therefore, the method offers high dynamic adjustment efficiency and excellent flexibility.

### Brief Description of the Drawings

FIG. 1 is a flowchart illustrating the steps of the animation effect implementation method for Bluetooth string lights according to the present invention;
FIG. 2 is a block diagram of the animation effect implementation method according to the present invention.

### Detailed Description of the Preferred Embodiments

To further illustrate the technical content, objectives, and advantages of the present invention, the following detailed embodiments are provided in conjunction with the accompanying drawings.

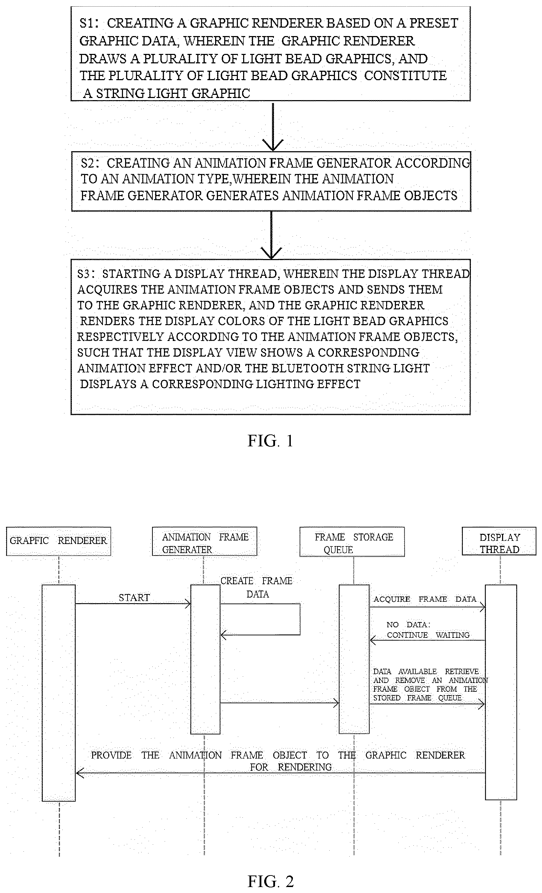

Referring to FIG. 1 and FIG. 2, a method for implementing animation effects of Bluetooth string lights is disclosed, comprising the following steps:

S1: Creating a graphic renderer based on preset graphic data, wherein the graphic renderer draws a plurality of light bead graphics, and the plurality of light bead graphics form a string light graphic;

S2: Creating an animation frame generator based on an animation type, wherein the animation frame generator generates animation frame objects;

S3: Starting a display thread, wherein the display thread obtains the animation frame objects and sends the animation frame objects to the graphic renderer. The graphic renderer renders the display colors of each light bead graphic based on the animation frame objects, so that a display view presents the corresponding animation effect and/or controls the Bluetooth string lights to produce the corresponding lighting effect.

From the above description, it is apparent that the animation effect implementation method provided by the present invention offers the following advantages: The method enables the graphic renderer to draw the light bead graphics, and to determine their display colors based on the animation frame objects generated by the animation frame generator. The cooperation between the graphic renderer and the animation frame generator improves the efficiency of generating and rendering animation frames, thereby producing smooth and visually rich animation effects for Bluetooth string lights. Moreover, this method eliminates the need for real-time computation of each light bead's color and position, significantly reducing the computational resources required. Additionally, the graphic renderer allows adjustments to the visual output or animation effect by modifying parameters-without redrawing all light bead graphics-thus achieving high dynamic adjustment efficiency and flexibility.

In a further embodiment, in step S1, creating the graphic renderer based on preset graphic data comprises:

Determining a rendering format based on the preset graphic data, wherein the rendering format includes a graphic rendering method and graphic rendering parameters; creating the graphic renderer based on the determined rendering format.

From the above description, it can be seen that applying different rendering methods and setting different rendering parameters corresponding to different preset graphic data can improve the efficiency and precision of graphic rendering. The animation effect implementation method provided by the present invention generates a graphic renderer based on the preset graphic data, thereby improving the rendering efficiency and accuracy of the graphic renderer and enhancing the flexibility of the animation implementation method.

In a further embodiment, in step S1, drawing the plurality of light bead graphics by the graphic renderer comprises: generating a bead array; and drawing the plurality of light bead graphics based on the bead array.

In a further embodiment, the preset graphic data comprises a plurality of preset graphic parameters respectively corresponding to the light bead graphics, wherein the preset graphic parameters include bead positions and bead sizes;

Generating the bead array by the graphic renderer comprises: creating a bead array; calculating a scaling factor based on the size of the preset view in the preset graphic data and the size of the display view; traversing the preset graphic parameters, and generating corresponding bead objects based on the scaling factor and the preset graphic parameters, wherein the bead objects are stored in the bead array.

From the above description, it can be seen that the graphic renderer can generate multiple light bead graphic objects corresponding one-to-one with the preset graphic data and store these graphic objects in a bead array. Simply put, the graphic renderer functions as the controller of the rendering process. It is responsible for rendering light bead graphics based on the graphic objects in the bead array, thereby transforming abstract graphic parameters into concrete visual representations on the display view. The final visual effect of the Bluetooth string light is formed by combining multiple rendered light bead graphics.

In a further embodiment, in step S2, creating the animation frame generator based on the animation effect comprises: determining an animation type according to the animation effect; and creating the animation frame generator based on the determined animation type.

As described above, different animation types may adopt different animation generation algorithms and apply different animation parameters. By determining the animation type according to the selected animation effect and creating an animation frame generator based on the animation type, the reliability and smoothness of generating animation frames can be ensured.

In a further embodiment, in step S2, generating an animation frame object by the animation frame generator comprises: calculating a gradient color array for each light bead graphic based on a preset color array and the number of light bead graphics; creating the animation frame object; configuring animation frame parameters for the animation frame object and storing them in a frame queue; calculating a refresh interval, refreshing the animation frame parameters according to the refresh interval to generate a new animation frame object, and storing the new animation frame object into the frame queue.

In a further embodiment, in step S3, obtaining the animation frame object by the display thread comprises: retrieving the animation frame object from the frame queue by the display thread.

From the above description, it can be seen that the animation frame generator places the animation frame objects into a frame queue, which serves as a buffer. The display thread retrieves the animation frame objects from the queue, thereby improving the fluency and continuity of the animation display.

In a further embodiment, the animation frame object includes at least one of the following: animation type, animation speed, animation direction, and animation graphic density, wherein the animation graphic density is used to calculate the number of light bead graphics participating in the animation effect generation according to the animation frame object.

Another objective of the present invention is to provide an electronic device comprising: a processor; and a memory storing a computer program, wherein the computer program is configured to be executed by the processor to implement the above-described animation effect implementation method.

Another objective of the present invention is to provide a computer-readable electronic medium, which is a computer-readable storage medium storing a computer program, wherein the computer program is configured to be executed by a processor to implement the above-described animation effect implementation method.

### Embodiment 1:

Referring to FIGS. 1 and 2, Embodiment 1 of the present invention provides a method for implementing animation effects of Bluetooth string lights, comprising the following steps:

S1: Creating a graphic renderer based on preset graphic data, wherein the graphic renderer draws a plurality of light bead graphics, and the plurality of light bead graphics form a string light graphic;

S2: Creating an animation frame generator based on an animation type, wherein the animation frame generator generates animation frame objects;

S3: Starting a display thread, wherein the display thread obtains the animation frame objects and sends them to the graphic renderer. The graphic renderer renders the display color of each light bead graphic based on the animation frame objects, so that the display view presents the corresponding animation effect and/or controls the Bluetooth string light to display the corresponding lighting effect.

In this embodiment, the animation frame generator runs as an independent thread. It generates animation frame objects based on the number of light bead graphics, their color requirements, and a preset animation algorithm. The graphic renderer runs on the user interface thread, which is responsible for first rendering multiple light bead graphics and then retrieving animation frame objects from the display thread. Based on each animation frame object, it renders the display color of each light bead graphic, thereby enabling the display view to present the corresponding animation effect. The display thread acts as a bridge between the animation frame generator and the graphic renderer.

In step S1 of this embodiment, creating a graphic renderer based on the preset graphic data comprises: determining a rendering format according to the preset graphic data, wherein the rendering format includes a graphic rendering method and graphic rendering parameters; and creating the graphic renderer based on the rendering format.

Specifically, the animation effect representation is determined from the preset graphic data. Different preset graphics may correspond to different rendering methods and rendering parameters. As the rendering controller, the graphic renderer is responsible for transforming abstract graphic parameters into concrete light bead visuals rendered within the display view.

In step S1 of this embodiment, the graphic renderer draws multiple light bead graphics by performing the following steps: generating a bead array; rendering multiple light bead graphics based on this bead array.

Specifically, the preset graphic data includes a plurality of preset graphic parameters, each corresponding to one light bead graphic. These parameters include bead positions and bead sizes. The graphic renderer generates the bead array comprising:

Creating the bead array; calculating a scaling factor based on the size of the preset view and the size of the display view; traversing the preset graphic parameters, and using the scaling factor and each parameter to generate the corresponding bead object, which is stored in the bead array.

This embodiment enables the transformation of preset graphic parameters into light bead objects that are suitable for rendering on the display view using the scaling factor. The graphic renderer uses these bead objects to render the corresponding light bead graphics. In particular, the scaling factor allows for converting the bead size and bead position from the preset graphic format into a format adapted for the actual display view, ensuring that the rendered graphics are appropriately scaled and positioned.

Correspondingly, in step S2 of this embodiment, creating the animation frame generator based on the animation effect comprises: determining the animation type according to the animation effect; and creating the animation frame generator according to the determined animation type.

Different animation types can employ different generation algorithms and configurations. For example, based on the intended animation effect (e.g., flow, blink, or composite effects), an appropriate animation type is selected to ensure the generation of animation frame objects is efficient and successful.

The animation frame generator functions as a controller responsible for generating a series of continuous animation frame objects based on the specified animation type and animation parameters.

In step S2 of this embodiment, the animation frame generator generates animation frame objects by: calculating a gradient color array for each light bead graphic based on a preset color array and the number of light bead graphics; creating an animation frame object, configuring the animation frame parameters of the object and placing them into a storage frame queue; and calculating a refresh interval, and updating the animation frame parameters based on the refresh interval to generate a new animation frame object, and placing the new animation frame object into the storage frame queue.

The animation frame generator is capable of generating animation frame objects. The animation generator can configure the animation frame objects based on parameters such as the number of light bead graphics, animation type, animation speed, animation direction, animation graphic density, and a preset color array. These parameters, stored within the animation frame object, assist the animation frame generator in computing animation frames. In particular, the animation graphic density is used to calculate the number of light bead graphics that produce animation effects based on the animation frame object.

Furthermore, the animation frame generator can obtain the number of light bead graphics to be controlled based on the number of light bead objects in the light bead array; meanwhile, the animation speed, animation direction, and color list define the animation form and variation pattern of the light bead graphics.

The graphic renderer uses the gradient color array to render the display color of each bead graphic so that each bead graphic on the display view displays its corresponding light color according to the gradient color array.

Furthermore, in step S2 of this embodiment, calculating the refresh interval according to the speed of the animation-i.e., refreshing the animation frame object at intervals of a predetermined number of milliseconds to generate a new animation frame object, and placing the new animation frame object into the storage frame queue.

The animation frame object may also include an animation flow direction. For example, if the flow direction is forward, the bead objects in the bead array are sequentially indexed, and the generator traverses the array in reverse. The color of bead object N-1 is assigned to bead object N, so that the graphic renderer can render the display colors accordingly. This produces a visual animation of forward-flowing light across the string.

In this embodiment, the animation frame generator can update a frame index for the animation frame object. When idle or after all frame objects have been retrieved, the generator waits for a corresponding time period before refreshing the animation frame object again. This enables cyclical animation effects with minimal computational overhead, resulting in high animation smoothness and low resource consumption.

In step 3 of this embodiment, obtaining the animation frame object by the display thread comprises: retrieving the animation frame object from the frame queue by the display thread.

In this embodiment, the display thread serves as the communication bridge between the animation frame generator and the graphic renderer, ensuring that the animation frame object generated by the animation frame generator can be successfully passed to the graphic renderer for rendering.

Referring to FIG.2, when the user initiates the animation effect, the animation frame generator is first activated. It begins generating animation frame objects and continues running in the background to produce new frame objects continuously based on preset parameters. Simultaneously, the display thread is started. It sends requests to the frame queue to retrieve animation frame objects. If no data is available in the frame queue, the display thread continues waiting. Once data is available, the display thread dequeues one animation frame object from the queue and transmits it to the graphic renderer. The graphic renderer then renders the display color of the light bead graphics according to the parameters of the animation frame object, so that the display view presents the corresponding animation effect and/or controls the Bluetooth string lights to display the corresponding lighting effect.

In this embodiment, the display thread maintains synchronization with the graphic renderer to ensure that the latest animation frame object is retrieved and rendered on time. For this purpose, synchronization mechanisms such as semaphores or condition variables may be employed to coordinate interactions between the display thread and the graphics renderer.

In this embodiment, the graphic renderer can render the shape and outline of each light bead graphic by defining a path. It uses mathematical formulas and algorithms to construct complex bead shapes. By defining rendering paths, the renderer gains precise control over the geometry and outline of each bead, and these paths can be dynamically adjusted to accommodate different rendering needs, offering high flexibility.

The animation effect implementation method provided by this embodiment requires minimal computational resources. Rendering is achieved by defining bead paths and generating animation frame objects using preset animation parameters. Therefore, the method is resource-efficient and imposes low hardware requirements on the device.

Moreover, the graphic generator and animation frame generator can be extended to meet evolving requirements. For example, to support a new type of light bead graphic, additional functionality may be added to the graphic generator, allowing the graphic renderer to apply new rendering methods or parameters to accommodate newly introduced bead shapes or outlines. Meanwhile, the animation frame generator can continue to generate frame objects based on the existing bead array without modification. To implement new animation effects, only the animation generator module needs to be updated, with no changes required to the graphic renderer.

In summary, the animation effect implementation method provided by the present invention utilizes a graphic renderer to draw light bead graphics. The renderer determines the display color of each bead based on animation frame objects generated by the animation frame generator. The cooperation between the graphic renderer and the animation frame generator significantly improves the efficiency of animation frame generation and rendering, enabling smooth and rich animation effects for Bluetooth string lights. The method eliminates the need to perform real-time calculations for the color and position of each light bead, thereby significantly reducing computational resource consumption. In addition, the graphic renderer can dynamically adjust the animation effect or visual output by modifying parameters, without redrawing all light bead graphics, thus offering high efficiency and flexibility in real-time adjustment.

The above description only illustrates preferred embodiments of the present invention and should not be construed as limiting the scope of the invention in any way. Any modifications, substitutions, or equivalent transformations made based on the teachings of the present specification and accompanying drawings, or any direct or indirect application of the invention in related technical fields, shall fall within the scope of protection defined by the present invention.

## Claims

1. A method for implementing an animation effect of a Bluetooth string light, **characterized by** comprising the following steps:
S1: Creating a graphic renderer based on preset graphic data, wherein the graphic renderer draws a plurality of light bead graphics, and the plurality of light bead graphics constitute a string light graphic;
S2: Creating an animation frame generator according to an animation type, wherein the animation frame generator generates animation frame objects;
S3: Starting a display thread, wherein the display thread acquires the animation frame objects and sends them to the graphic renderer, and the graphic renderer renders the display colors of the light bead graphics respectively according to the animation frame objects, such that the display view shows a corresponding animation effect and/or the Bluetooth string light displays a corresponding lighting effect.

2. The method for implementing an animation effect of a Bluetooth string light according to claim 1, **characterized in that**, in step S1, creating the graphic renderer based on preset graphic data comprises:
Determining a rendering format according to the preset graphic data, wherein the rendering format comprises a graphic rendering method and graphic rendering parameters, and creating the graphic renderer based on the rendering format.

3. The method for implementing an animation effect of a Bluetooth string light according to claim 1, **characterized in that**, in step S1, drawing the plurality of light bead graphics by the graphic renderer comprises: generating a bead array by the graphic renderer; and drawing the plurality of light bead graphics based on the bead array.

4. The method for implementing an animation effect of a Bluetooth string light according to claim 3, **characterized in that** the preset graphic data comprises a plurality of preset graphic parameters respectively corresponding to the plurality of light bead graphics, and the preset graphic parameters comprise bead positions and bead sizes;
Generating the bead array by the graphic renderer comprises: creating the bead array; calculating a scaling factor based on the size of a preset view of the preset graphic data and the size of the display view; traversing the preset graphic parameters and generating corresponding bead objects based on the scaling factor and the preset graphic parameters, wherein the bead objects are stored in the bead array.

5. The method for implementing an animation effect of a Bluetooth string light according to claim 1, **characterized in that**, in step S2, creating the animation frame generator based on the animation effect comprises: determining an animation type according to the animation effect; creating the animation frame generator based on the animation type.

6. The method for implementing an animation effect of a Bluetooth string light according to claim 1, **characterized in that**, in step S2, generating animation frame objects by the animation frame generator comprises: calculating a gradient color array for each light bead graphic based on a preset color array and the number of light bead graphics; creating an animation frame object, configuring animation frame parameters for the animation frame object, and storing the animation frame parameters into a frame queue; calculating a refresh cycle and refreshing the animation frame parameters of the animation frame object according to the refresh cycle to generate a new animation frame object, and placing the new animation frame object into the frame queue.

7. The method for implementing an animation effect of a Bluetooth string light according to claim 6, **characterized in that**, in step S3, obtaining the animation frame object by the display thread comprises: retrieving the animation frame object from the frame queue by the display thread.

8. The method for implementing an animation effect of a Bluetooth string light according to claim 1, **characterized in that**, wherein the animation frame object comprises at least one of: an animation type, an animation speed, an animation direction, and an animation graphic density, wherein the animation graphic density is used to determine the number of light bead graphics involved in generating the animation effect based on the animation frame object.

9. An electronic device, **characterized in that** it comprises:
a processor;
a memory storing a computer program, wherein the computer program is configured to be executed by the processor to implement the method for implementing an animation effect according to any one of claims 1 to 8.

10. A computer-readable electronic medium, **characterized in that** the electronic medium is a computer-readable storage medium storing a computer program, wherein the computer program is configured to be executed by a processor to implement the method for implementing an animation effect of a Bluetooth string light according to any one of claims 1 to 8.
